# EUROPÄISCHE PATENTANMELDUNG

(11) **EP 1 921 357 A1**
(43) Veröffentlichungstag der Anmeldung: **14.05.2008**
(21) Anmeldenummer: 08001826.0
(22) Anmeldetag: 23.08.2005
(51) Int. Cl.: F16K 7/07

(54) **Ventil**

(30) Priorität: 10.09.2004 DE 102004043922
(62) Teilanmeldung aus: 05018217.9
(71) Anmelder: KVT GmbH, 79199 Kirchzarten (DE)
(72) Erfinder: Käding, Günter, Dipl.-Ing., 79199 Kirchzarten (DE)
(74) Vertreter: Goy, Wolfgang

(57) **Zusammenfassung**

Ein Ventil mit einem rohrförmigen Gehäuse 3, dessen Mantel eine Zuführung 6 für ein Druckmedium, insbesondere Druckluft, aufweist, mit zwei an den beiden Enden des rohrförmigen Gehäuses 3 angeordneten rohrförmigen Anschlußteilen 1 sowie mit einer in dem Gehäuse 3 angeordneten, flexiblen Schlauchmanschette 2, deren beide Enden druckdicht festgelegt sind, wobei zwischen der Innenwand des Gehäuses 3 und der Außenwand der Schlauchmanschette 2 ein Steuerdruckraum 5 gebildet ist, welcher über die Zuführung 6 mit dem Druckmedium beaufschlagbar ist, weist in dem Steuerdruckraum 5 einen zusätzlichen, separaten Verdrängungskörper 10 auf.

## Beschreibung

Die Erfindung betrifft ein Ventil nach dem Oberbegriff des Anspruchs 1.

Derartige Ventile sind als sogenannte Quetschventile bekannt. Sie dienen als Absperrarmaturen und können für gasförmige, flüssige und pastöse Medien sowie für Schüttgüter eingesetzt werden. Bevorzugte Anwendungsbereiche sind die Lebensmittel-, Getränke-, Pharma-, Kosmetik-, Chemie-, Kunststoff-, Holz-, Zement-, Bergbau-, Kläranlagen- und Kraftwerksindustrie. Das vorwiegend als Absperrarmatur (vorwiegend in produktführenden Rohrleitungen aller Art) verwendete Quetschventil kann aber auch als Regelarmatur Verwendung finden. Hier wird dann lediglich als Steuermedium nicht Druckluft (oder sonstige neutrale Gase) eingesetzt, sondern Wasser (oder eine andere neutrale Flüssigkeit), da Flüssigkeiten nicht komprimierbar sind und somit bei den Quetschventilen eine Regelfunktion erbracht werden kann, die einen definierten Verengungsquerschnitt der Armatur ermöglicht.

Derartige Quetschventile weisen ein im wesentlichen rohrförmiges Gehäuse auf, dessen Mantel eine Zuführung für Druckluft aufweist. In dem Gehäuse ist eine flexible Schlauchmanschette angeordnet, wobei die beiden Enden der Schlauchmanschette zwischen der Innenwandung des Gehäuses und der Außenwandung eines Anschlußteils druckdicht festgeklemmt sind. Zwischen der Innenwand des Gehäuses und der Außenwand der Schlauchmanschette ist ein Steuerdruckraum gebildet. Dieser ist über die Zuführung mit Druckluft beaufschlagbar, so daß die Schlauchmanschette zusammengedrückt wird und der Ventildurchgang dicht geschlossen ist. Zum Öffnen des Quetschventils wird der Steuerdruckraum entlüftet. Dabei gelangt die Schlauchmanschette aufgrund der integrierten Rückstellkraft, die durch den Betriebsdruck des Mediums unterstützt wird, wieder in die Öffnungsposition, so daß ein voller und freier Durchgang für das Medium gegeben ist.

Der Nachteil bei diesem bekannten Quentschventil besteht darin, daß die Schlauchmanschette bei erhöhter innerer Druckbeaufschlagung beispielsweise bei einer Reinigungsprozedur, bei welcher mit wesentlich höherem Druck gefahren wird als mit dem Produkt, überdehnt und damit vorzeitig zerstört wird.

Davon ausgehend liegt der Erfindung die Aufgabe zugrunde, ein Ventil der eingangs angegebenen Art mit einer verbesserten Schlauchmanschette dergestalt zu schaffen, daß sie nicht so schnell zerstört wird.

Die technische Lösung ist gekennzeichnet durch die Merkmale im Kennzeichen des Anspruchs 1.

Der erfindungsgemäße Verdrängungskörper im Steuerdruckraum des Quetschventils hat den Zweck zu verhindern, daß die Schlauchmanschette bei erhöhter innerer Druckbeaufschlagung beispielsweise bei einer Reinigungsprozedur, bei welcher mit wesentlich höherem Druck gefahren wird als mit dem Produkt, überdehnt und damit vorzeitig zerstört wird. Der Querschnitt des vorzugsweise 2-teiligen Verdrängungskörpers ist so bemessen, daß sich die Schlauchmanschette bei Druckbeaufschlagung von der Produktseite her an der so klein wie möglich bemessenen Innenkontur des Verdrängungskörpers anlegen kann, so daß dadurch die Ausdehnung auf ein Minimum begrenzt bleibt.

Die Grundidee der Weiterbildung gemäß Anspruch 2 besteht darin, eine druckdichte Verbindung zu der Schlauchmanschette dadurch zu schaffen, daß ein Klebevorgang oder ein Vulkanisiervorgang oder eine andere homogene und spaltfreie Verbindung zwischen dem Elastomer der Schlauchmanschette und dem festen, starren Anschlußteil die Spalten schließt, so daß sich keine Verunreinigungen sowie Bakterien absetzen können. Denn durch die Vulkanisierungsverbindung bzw. durch die Klebeverbindung sind diese Spalten geschlossen. Dabei sind vorzugsweise die beiden endseitigen Außenumfangsflächen der Schlauchmanschette jeweils an der korrespondierenden Innenumfangsfläche des zugeordneten Anschlußteils angeklebt oder anvulkanisiert. Aber auch eine im weitesten Sinne stirnseitige Verbindung ist denkbar. Die beiden Anschlußteile und die Schlauchmanschette bilden dabei immer eine vorgefertigte Baueinheit. Auf diese Baueinheit wird dann das rohrförmige Gehäuse aufgeschoben und mit den beiden Anschlußteilen fest verbunden. Ein weiterer Vorteil des Quetschventils besteht darin, daß eine defekte Schlauchmanschette leicht ersetzt werden kann. Es ist lediglich erforderlich, daß zunächst das äußere Gehäuse entfernt wird, so daß dann die auf den Anschlußteilen befestigte Schlauchmanschette als komplette Baueinheit entfernt werden kann. Eine neue Baueinheit (mit den anvulkanisierten oder angeklebten Anschlußteilen an die neue Schlauchmanschette) kann dann auf einfachste Weise und sehr schnell ohne besondere Fachkenntnisse, Fingerfertigkeit und mit einfachstem Werkzeug auch von ungeübten Personen ausgeführt werden. Der reine Manschettenwechsel kann (je nach Ventilgröße) in 1 bis 2 Minuten erfolgen. Die (meist metallischen) Anschlußteile können bei einer verschlissenen Baueinheit abgetrennt, gereinigt und wiederverwendet werden. Die Verbindung zwischen den beiden Anschlußteilen und dem aufgeschobenen rohrförmigen Gehäuse erfolgt insbesondere durch Verschraubung. Eine Fixierung mittels Gewindestiften ist ebenfalls denkbar.

Vorzugsweise ist gemäß Anspruch 3 zwischen dem Gehäuse und dem Anschlußteil ein Dichtring angeordnet, so daß der Steuerdruckraum absolut druckdicht ist. Bei einer nachfolgend noch näher zu beschreibenden Ausführungsvariante kann auf den Dichtring allerdings verzichtet werden.

Die Weiterbildung gemäß Anspruch 4 schafft eine zusätzliche Abdichtung des Steuerdruckraumes, indem ein endseitiger Bereich der Schlauchmanschatte an der Innenumfangsfläche des rohrförmigen Gehäuses anliegt.

Eine erste Ausführungsvariante hiervon schlägt Anspruch 5 vor. Die Grundidee besteht darin, daß durch eine entsprechende Formgebung die Schlauchmanschette mit ihrer dem Steuerdruckraum zugewandten Begrenzungsfläche im wesentlichen senkrecht auf die Innenwandung des äußeren Gehäuses trifft. Dadurch wird durch die Druckbeaufschlagung im Steuerdruckraum eine axiale Kraft auf die Schlauchmanschette erzeugt, welche verhindert, daß sich die Schlauchmanschette von der beispielsweise anvulkanisierten Innenwandung des rohrförmigen Gehäuses löst. Diese Ausbildung der Schlauchmanschette hat den Vorteil, daß diese sehr kostengünstig, insbesondere kostengünstiger als die nachfolgende Alternative in der Herstellung ist.

Eine bevorzugte Alternative schlägt Anspruch 6 vor. Die Grundidee besteht darin, daß durch die Druckbeaufschlagung im Steuerdruckraum die Dichtlippe automatisch nach außen an die Innenwandung des rohrförmigen Gehäuses gepreßt wird, so daß eine zusätzliche Dichtwirkung erzielt wird. Je größer dabei der Druck im Steuerdruckraum ist, desto größer ist auch die Abdichtkraft. In diesem Fall kann - wie zuvor bereits erwähnt - auf zusätzliche Dichtringe verzichtet werden.

Eine Weiterbildung hiervon schlägt gemäß Anspruch 7 vor, daß die Dichtlippe radial nach außen vorgespannt ist. Dies erhöht die Dichtwirkung.

Eine weitere Weiterbildung schlägt gemäß Anspruch 8 vor, daß die beiden endseitigen Anschlußteile innenstirnseitig jeweils einen angeformten, wulstartigen Ring aufweisen. Dieser Ring ragt stirnseitig in die Schlauchmanschette hinein, so daß er in der Schlauchmanschette eingebettet ist. Dies hat den Vorteil, daß die Kontakt- und Verbindungsfläche zwischen der Schlauchmanschette und dem Anschlußteil vergrößert ist, so daß aufgrund der größeren Oberfläche eine verbesserte Haftung geschaffen ist. Dies kann noch dadurch unterstützt werden, daß im Bereich der Gummierung die Metallkontur des Anschlußteils grob gedreht ist, so daß sich eine Art Sägezahnkontur ergibt, welche die Oberfläche gleichermaßen vergrößert und die Haftung verbessert. Außerdem erhöht der wulstartige Ring die Innere Stabilität der Schlauchmanschette.

Ausführungsbeispiele eines Quetschventils werden nachfolgend anhand der Zeichnungen beschrieben. In diesen zeigt:
- Fig. 1: eine Längsschnittdarstellung durch das Quetschventil in einer ersten Ausführungsform (für geringe Beanspruchungen);
- Fig. 2: eine Längsschnittdarstellung durch das Quetschventil in einer zweiten Ausführungsform (für mittlere Beanspruchungen);
- Fig. 3: eine Längsschnittdarstellung durch das Quetschventil in einer dritten Ausführungsform (für hohe Beanspruchungen);
- Fig. 4: eine Längsschnittdarstellung durch das Quetschventil in einer vierten Ausführungsform mit einem zusätzlichen Ringwulst;
- Fig. 5a: eine Weiterbildung der vierten Ausführungsform in Fig. 4 mit einem zusätzlichen Verdrängungskörper im Steuerdruckraum;
- Fig. 5b: einen Querschnitt durch die Ausführungsform in Fig. 5a.

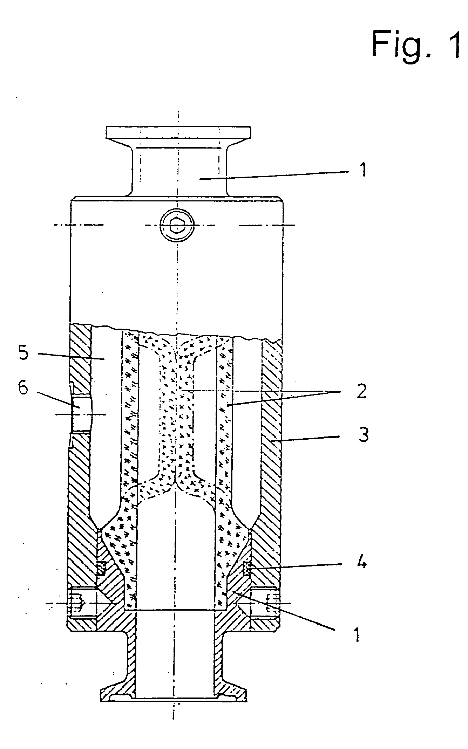

Das Quetschventil der in Fig. 1 dargestellten ersten Ausführungsform weist zwei endseitige, im wesentlichen rohrförmige Anschlußteile 1 auf, mit welchen alle erdenklichen Rohrleitungsanschlüsse realisierbar sind, beispielsweise jede Art von Flanschanschlüssen, alle gängigen Gewindeanschlüsse oder auch die Verbindung mit Rohrenden bzw. Anschweißenden.

Diese beiden Anschlußteile 1 sind an eine flexible Schlauchmanschette 2 angesetzt und im Bereich der Kontaktflächen durch Verkleben oder durch Vulkanisation miteinander druckdicht verbunden.

Auf diese Baueinheit, bestehend aus Schlauchmanschette 2 und den beiden endseitigen Anschlußteilen 1, ist ein rohrförmiges Gehäuse 3 aufgeschoben und mit den Anschlußteilen 1 jeweils verschraubt. Dabei ist zusätzlich noch ein Dichtring 4 vorgesehen. Das Gehäuse 3 ist im Querschnitt meist kreisrund und einteilig (bei kleineren Baugrößen). Es kann aber auch bei größeren Baueinheiten oval oder länglich sein. Das Gehäuse 3 kann auch aus zwei Halbschalen bestehen. In diesem Fall wird das zweiteilige Gehäuse 3 quer zur Ventilachse, d.h. radial montiert bzw. demontiert.

Zwischen der Innenmantelfläche des rohrförmigen Gehäuses 3 und der Außenmantelfläche der Schlauchmanschette 2 ist ein Steuerdruckraum 5 definiert. In diesem mündet eine Zuführung 6 für Druckluft.

### Die Funktionsweise ist wie folgt:

Im geöffneten Zustand des Quetschventils befindet sich die Schlauchmanschette 2 in ihrer gestreckten Lage, wie dies in Fig. 1 dargestellt ist. Durch Beaufschlagung des Steuerdruckraumes 5 mit Druckluft über die Zuführung 6 wird die Schlauchmanschette 2 aufgrund ihrer Flexibilität nach innen verformt, so daß sich eine allseitige Anlagefläche bildet, welche den Durchgang sperrt. Dies ist in Fig. 1 ebenfalls angedeutet. Zum Öffnen des Quetschventils wird der Steuerdruckraum 5 entlüftet, so daß die Schlauchmanschette 2 wieder in ihren gestreckten Ausgangszustand zurückkehrt.

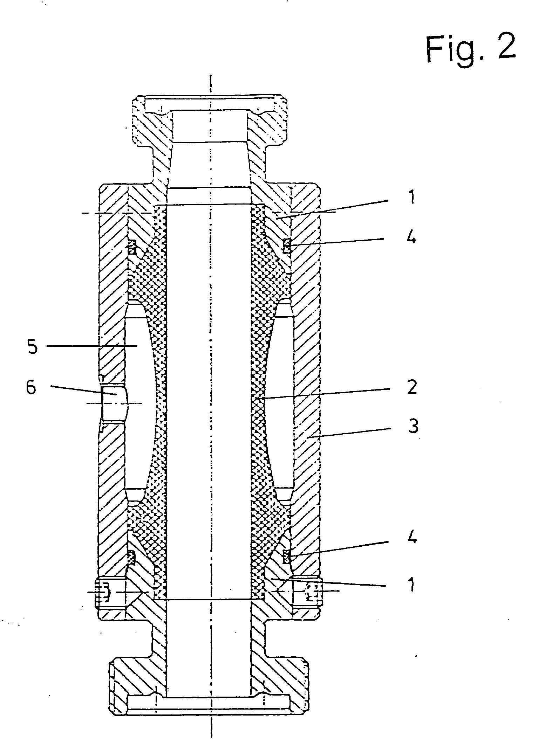

Die Ausführungsvariante in Fig. 2 unterscheidet sich in zwei Punkten von der Ausführungsvariante in Fig. 1.

Zum einen weist die Schlauchmanschette 2 im Bereich des endseitigen Steuerdruckraumes 5 einen Bereich auf, in welchem die Schlauchmanschette 2 an der Innenwandung des Gehäuses 3 anliegt und somit eine gewisse Dichtwirkung erzielt. In diesem Bereich ist zwischen der Schlauchmanschetten-Baueinheit und dem Gehäuse 3 keine Verklebung und keine Anvulkanisation erfolgt. Diese besteht - nach wie vor - im Bereich der Kontaktfläche zwischen dem Anschlußteil 1 und der Schlauchmanschette 2.

Zum anderen trifft die Wandung der Schlauchmanschette 2 im endseitigen Bereich des Steuerdruckraums 5 im wesentlichen senkrecht auf die Innenmantelfläche des Gehäuses 3. Bei Druckbeaufschlagung des Steuerdruckraumes 5 mit Druckluft wirkt dabei in diesem Bereich die Kraft im wesentlichen achsparallel auf die Schlauchmanschette 2, so daß keine Gefahr besteht, daß sich die Schlauchmanschette 2 in dem vorgenannten Berührungsbereich von der Innenwandung des Gehäuses 3 abhebt und daß sich das Anschlußteil 1 in dem vorgenannten Berührungsbereich von der flexiblen Schlauchmanschette 2 abhebt oder löst.

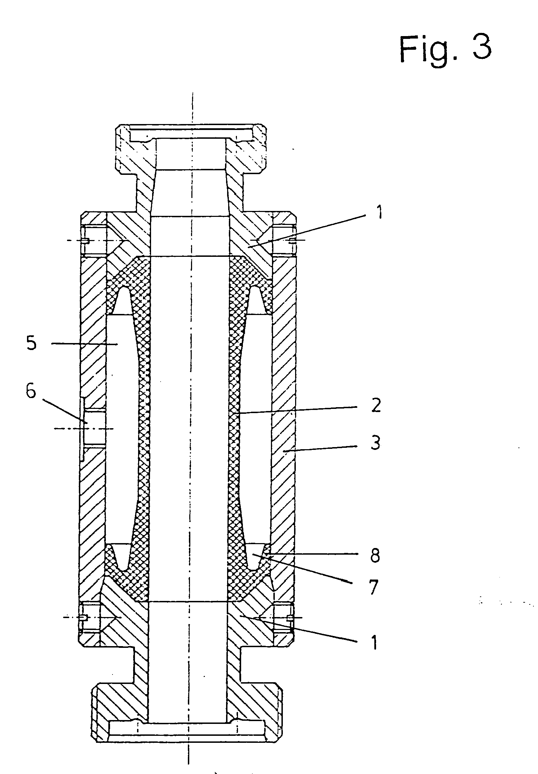

Die Ausführungsform in Fig. 3 stellt eine Weiterentwicklung der Ausführungsform in Fig. 2 dar. Hier weist die Schlauchmanschette 2 eine Hinterschneidung 7 mit einer Dichtlippe 8 auf, welche radial nach außen vorgespannt ist. Wenn hier der Steuerdruckraum 5 mit Druckluft beaufschlagt wird, wirkt in der Hinterschneidung 7 auf die Dichtlippe 8 eine radiale Kraft nach außen, welche die Dichtlippe 8 gegen die Innenwandung des Gehäuses 3 drückt und eine Dichtwirkung erzielt. Dabei ist in der Zeichnung erkennbar, daß in diesem Fall auf den zusätzlichen Dichtring 4 verzichtet werden kann.

Wesentlich ist bei dieser Ausführungsform, daß die Walkarbeit zwischen den angesetzten, anvulkanisierten oder angeklebten Anschlußteilen 1 und der mittleren, flexiblen Schlauchmanschette 2 erheblich reduziert wird. Es entstehen zwischen den vorgenannten Teilen praktisch keine Zugkräfte, da das Steuermedium (Druckluft oder Druckwasser) einen Druck gegen das anvulkanisierte Teil ausübt. Dies bewirkt, daß sich die Walkbewegungen und Walkkräfte allein im flexiblen Teil abspielen.

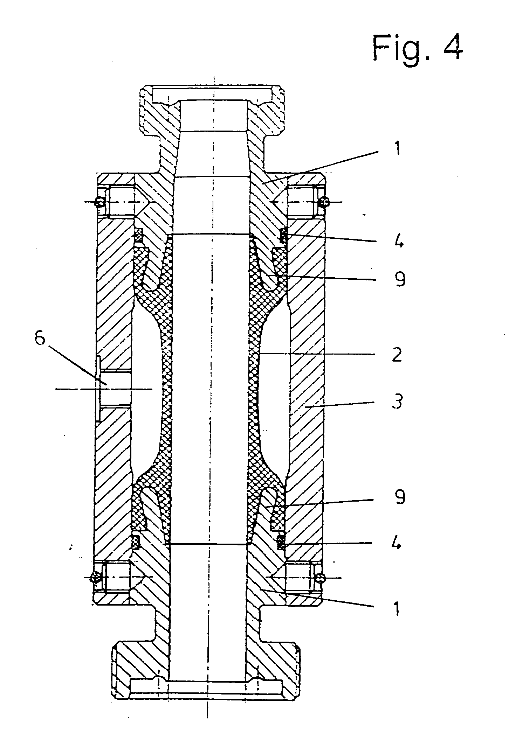

Bei den zuvor beschriebenen drei Ausführungsformen der Fig. 1 bis 3 sind die beiden endseitigen Außenumfangsflächen der Schlauchmanschette 2 jeweils an der korrespondierenden Innenumfangsfläche des zugeordneten Anschlußteils 1 angeklebt oder anvulkanisiert. Dieses Grundkonstruktionsprinzip ist auch bei der vierten Ausführungsform in Fig. 4 im weitesten Sinne realisiert.

Bei dieser vierten Ausführungsform in Fig. 4 weisen die rohrförmigen Anschlußteile 1 stirnseitig, d. h. zur Schlauch manschette 2 hin gerichtet einen angeformten, wulstartigen Ring 9 auf, welcher etwas radial nach außen geneigt ist. Dieser im Querschnitt lippen artige Ring 9 ragt stirnseitig in die Schlauchmanschette 2 hinein und ist in dieser gewissermaßen eingebettet. Auch hier erfolgt die Verbindung zwischen dem Anschlußteil 1 und der Schlauchmanschette 2 durch Kleben oder Vulkanisation oder auf andere vergleichbare Art und Weise, so daß sich kein Spalt bildet, in welchem sich Verunreinigungen absetzen können. Die Ausbildung der Schlauchmanschette 2 im Anlagebereich zum rohrförmigen Gehäuse 3 ist dabei dergestalt, daß die Außenwand der Schlauchmanschette 2 und die Innenwand des rohrförmigen Gehäuses 3 einen spitzen Winkel miteinander einschließen. Durch den Ring 9 erfährt die Schlauchmanschette 2 darüber hinaus eine höhere Stabilität.

Dieser zusätzliche Ring 9 am Anschlußteil 1 kann auch bei den drei ersten Ausführungsformen grundsätzlich vorgesehen sein.

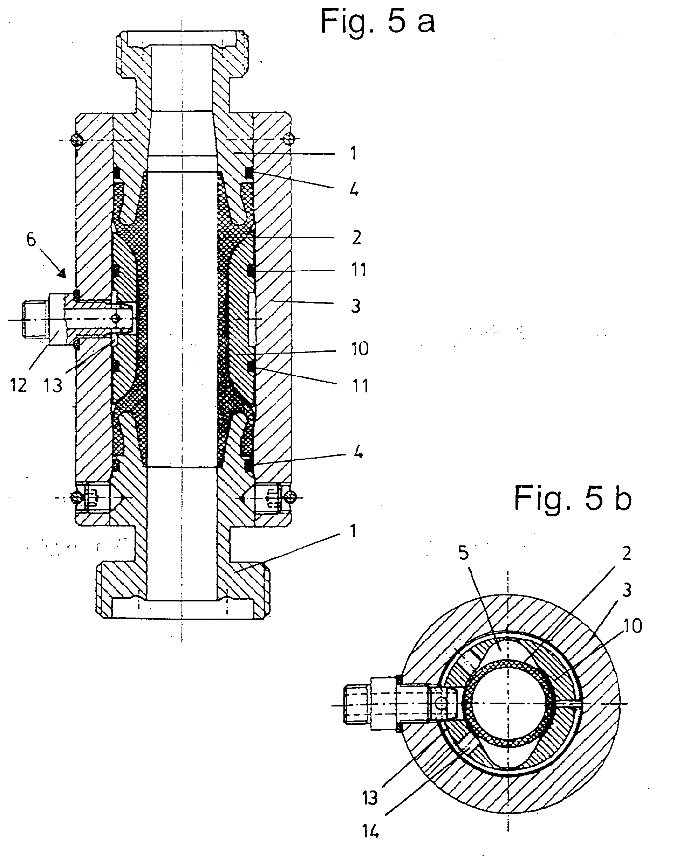

Die fünfte Ausführungsform in Fig. 5a und 5b basiert auf der zuvor beschriebenen vierten Ausführungsform in Fig. 4. Zusätzlich ist in dem Steuerdruckraum 5 ein Verdrängungskörper 10 angeordnet. Dieser Verdrängungskörper 10 ist zweiteilig ausgebildet und besitzt die in Fig. 5b dargestellte Querschnittsform.

Die Vorgehensweise beim Einbau ist dabei wie folgt: Vor dem Einschieben der Schlauchmanschette 2 mit den beiden anvulkanisierten oder angeklebten, starren Anschlußteilen 1 werden die beiden Hälften des Verdrängungskörpers 10 über das Mittelstück der Schlauchmanschette 2 angelegt und fixiert. Im vorliegenden Ausführungsbeispiel erfolgt die Fixierung durch zwei O-Ringe 11, welche jeweils in einer Nut liegen und dadurch nicht auftragen. Sie sind kleiner bemessen als der Innendurchmesser des Gehäuses 3. Danach wird die Baueinheit in das rohrförmige Gehäuse 3 geschoben. Eine radiale Fixierung des Verdrängungskörpers 10 wird erreicht durch anschließendes Einschrauben eines Steuerluftanschlusses 12.

### Die Funktionsweise ist wie folgt:

Der Verdrängungskörper 10 hat den Zweck zu verhindern, daß die Schlauchmanschette 2 bei erhöhter Druckbeaufschlagung von innen überdehnt und damit vorzeitig zerstört wird. Eine derartige erhöhte Druckbeaufschlagung kann beispielsweise bei der Reinigungsprozedur auftreten, bei der mit wesentlich höherem Druck gefahren wird als mit dem Produkt selbst.

Der Querschnitt des Verdrängungskörpers 10 ist so bemessen, daß sich die Schlauchmanschette 2 bei Druckbeaufschlagung von der Produktseite her an der so klein wie möglich bemessenen Innenkontur des Verdrängungskörpers 10 anlegen kann, so daß dadurch die Ausdehnung auf ein Minimum begrenzt bleibt, was ohne den Verdrängungskörper 10 nicht möglich wäre. Dabei ist zwischen der Außenmantelfläche des Verdrängungskörpers 10 und der Innenmantelfläche des Gehäuses 3 eine Luftverteilungsnut 13 ausgebildet. Durch zusätzliche Lufteinströmungsbohrungen 14 ist die Verbindung ins Innere des Steuerdruckraums 5 hergestellt. Diese Verbindung ist auch im Anlagebereich zwischen den beiden Hälften des Verdrängungskörpers 10 hergestellt. Wie die Querschnittsdarstellung im Bereich des Steuerluftanschlusses 12 zeigt, ist in diesem Bereich der Verdrängungskörper 10 radial aufgeweitet, so daß hier die notwendige Druckbeaufschlagung durch die Druckluft ohne weiteres erfolgen kann.

Der Verdrängungskörper stellt für sich eine eigenständige, unabhängige Erfindung dar. Er ist grundsätzlich bei allen Arten von sogenannten Quetschventilen einsetzbar, bei welchen allgemein in einen rohrförmigen Gehäuse eine Schlauchmanschette angeordnet ist, welche in einem dazwischen definierten Steuerdruckraum mit einem Druckmedium beaufschlagbar ist.

### Bezugszeichenliste

- 1: Anschlußteil
- 2: Schlauchmanschette
- 3: Gehäuse
- 4: Dichtring
- 5: Steuerdruckraum
- 6: Zuführung
- 7: Hinterschneidung
- 8: Dichtlippe
- 9: Ring
- 10: Verdrängungskörper
- 11: O-Ring
- 12: Steuerluftanschluß
- 13: Luftverteilungsnut
- 14: Lufteinströmungsbohrung

## Patentansprüche

1. Ventil
mit einem rohrförmigen Gehäuse (3), dessen Mantel eine Zuführung (6) für ein Druckmedium, insbesondere Druckluft, aufweist,
mit zwei an den beiden Enden des rohrförmigen Gehäuses (3) angeordneten rohrförmigen Anschlußteilen (1) sowie
mit einer in dem Gehäuse (3) angeordneten, flexiblen Schlauchmanschette (2), deren beide Enden druckdicht festgelegt sind,
wobei zwischen der Innenwand des Gehäuses (3) und der Außenwand der Schlauchmanschette (2) ein Steuerdruckraum (5) gebildet ist, welcher über die Zuführung (6) mit dem Druckmedium beaufschlagbar ist,
**dadurch gekennzeichnet,**
**daß** in dem Steuerdruckraum (5) ein zusätzlicher, separater Verdrängungskörper (10) angeordnet ist.

2. Ventil nach dem vorhergehenden Anspruch,
**dadurch gekennzeichnet,**
**daß** die beiden endseitigen Umfangsflächen der Schlauchmanschette (2) jeweils an der korrespondierenden Umfangsfläche des zugeordneten Anschlußteils (1) druckdicht angeklebt oder anvulkanisiert sind und
**daß** das rohrförmige Gehäuse (3) auf die Anschlußteil (1) / Schlauchmanschetten (2) - Einheit aufgeschoben und mit den beiden Anschlußteilen (1) fest verbunden ist.

3. Ventil nach einem der vorhergehenden Ansprüche,
**dadurch gekennzeichnet,**
**daß** zwischen dem Gehäuse (3) und dem Anschlußteil (1) ein Dichtring (4) angeordnet ist.

4. Ventil nach einem der vorhergehenden Ansprüche,
**dadurch gekennzeichnet,**
**daß** die Schlauchmanschette (2) im Bereich des Anschlußteils (1) zusätzlich bereichsweise an der Innenumfangsfläche des rohrförmigen Gehäuses (3) anliegt.

5. Ventil nach Anspruch 4,
**dadurch gekennzeichnet,**
**daß** die Schlauchmanschette (2) im endseitigen Begrenzungsbereich des Steuerdruckraumes (5) im Berührungspunkt mit der Innenmantelfläche des rohrförmigen Gehäuses (3) im wesentlichen senkrecht auf die Innenmantelfläche des Gehäuses (3) auftrifft.

6. Ventil nach Anspruch 4,
**dadurch gekennzeichnet,**
**daß** die Schlauchmanschette (2) im endseitigen Begrenzungsbereich des Steuerdruckraumes (5) eine Hinterschneidung (7) mit einer an der Innenmantelfläche des Gehäuses (3) anliegenden Dichtlippe (8) aufweist.

7. Ventil nach Anspruch 6,
**dadurch gekennzeichnet,**
**daß** die Dichtlippe (8) vorgespannt ist.

8. Ventil nach einem der vorhergehenden Ansprüche,
**dadurch gekennzeichnet,**
**daß** die Anschlußteile (1) jeweils einen angeformten Ring (9) aufweisen, welcher stirnseitig in die Schlauch manschette (2) hineinragt und in dieser eingebettet ist.
